# EUROPÄISCHE PATENTSCHRIFT

(11) **EP 0 451 717 B1**
(45) Veröffentlichungstag und Bekanntmachung des Hinweises auf die Patenterteilung: **19.10.1994**
(21) Anmeldenummer: 91105391.6
(22) Anmeldetag: 05.04.1991
(51) Int. Cl.: B66F 11/00, B65G 21/00

(54) **Hubtisch zur Überwindung eines Höhensprungs in Förderstrassen**
Elevating platform for surmounting a difference in level of conveyor tracks
Table élévatrice pour surmonter une différence de niveau d'une voie de transport

(30) Priorität: 07.04.1990 DE 4011318; 23.03.1991 DE 4109631
(43) Veröffentlichungstag der Anmeldung: 16.10.1991
(73) Patentinhaber: Stotz, Krämer GmbH Materialflussysteme und Automation, D-70806 Kornwestheim (DE)
(72) Erfinder: Bracher, Heinz, W-7129 Brackenheim-Botenheim (DE)
(74) Vertreter: Wasmuth, Rolf, Dipl.-Ing.

(56) Entgegenhaltungen:
- DE-B- 1 127 915
- DE-U- 1 903 687

## Beschreibung

Die Erfindung betrifft einen Hubtisch zur Überwindung eines Höhensprungs in Förderstraßen für Transporteinrichtungen wie Skids oder dergleichen nach dem Oberbegriff des Anspruches 1.

Bei einem bekannten Hubtisch dieser Art sind die Hubzapfen exzentrisch an Wellen gelagert, durch deren Drehung die Hubzapfen infolge ihrer exzentrischen Lagerung einen vertikalen Hub ausführen. Zur Drehung der Wellen ist ein Antrieb vorgesehen, der über Rollenketten mit auf den Wellen festgeflanschten Zahnrädern antriebsverbunden ist. Diese Rollenketten liegen innerhalb eines als Ständer ausgebildeten Rahmens.

Müssen die Ketten aufgrund Verschleißes ausgetauscht werden, so ist dies prinzipiell durch Öffnen eines Kettengliedes möglich. Verstärkt werden jedoch endlose Rollenketten eingesetzt, da diese nicht das Schwachglied eines Kettenschlosses aufweisen. Die endlosen Rollenketten müssen dann jedoch nach der Montage zur Endloskette verbunden werden, zum Beispiel durch Nieten oder dergleichen, was jedoch zeit- und arbeitsaufwendig ist. Soll eine bereits verbundene Endloskette montiert werden, muß zum Auflegen der Kette auf das Zahnrad die Welle auf zumindest einer Seite aus ihrem Lager gelöst werden, was zeit- und arbeitsaufwendig ist.

Da der bekannte Hubtisch in Produktionsstraßen eingesetzt ist und jeder zusätzliche Montage- und Demontageaufwand die Ausfallzeit der Produktionsstraße erhöht, ist für den Betreiber einer Produktionsstraße ein geringer Zeitaufwand bei Reparatur- und Montagearbeiten von erheblicher Bedeutung.

Der Erfindung liegt die Aufgabe zugrunde, einen Hubtisch nach dem Oberbegriff des Anspruches 1 derart weiterzubilden, daß der bei Wartungs- oder Reparaturarbeiten erforderliche Montage- und Demontageaufwand endloser Kraftübertragungsmittel möglichst gering ist.

Die Aufgabe wird erfindungsgemäß durch die kennzeichnenden Merkmale des Anspruches 1 gelöst.

Vorteilhafte weitere Ausgestaltungen der Erfindung sind in den Unteransprüchen gekennzeichnet.

Die Anordnung der Kraftübertragungselemente - in Draufsicht auf den Hubtisch gesehen - außerhalb des Ständerrahmens ermöglicht ein einfaches Freilegen des Hubantriebs, ohne daß umfangreiche Montage- oder Demontagearbeiten notwendig sind. Dabei ist von Vorteil, daß der Hubrahmen unter der Wirkung der Schwerkraft auf den Hubgliedern lediglich aufliegt, so daß er bei Bedarf von den Hubgliedern einfach abgehoben werden kann.

In einem ersten Ausführungsbeispiel der Erfindung liegen die Kraftübertragungselemente - in Draufsicht auf den Hubtisch gesehen - zwischen dem Ständerrahmen und dem Hubrahmen.

Hierdurch wird eine geringe Baubreite und Bauhöhe erzielt. Zum Wechseln der endlosen Kraftübertragungselemente wird der Hubtisch in seine oberste Hubposition gefahren, in dieser Lage festgekeilt und der Hubantrieb wieder in die unterste Lage verfahren. Da die Hubgleider am Hubrahmen nur anliegen, heben sie bei höhenfest verkeiltem Hubrahmen von diesem ab, wodurch ein dem Hub entsprechender Spalt zwischen jedem Hubglied und dem Hubrahmen entsteht. Die endlosen Kraftübertragungselemente zwischen dem Antrieb und der Hubanordnung können somit axial entnommen werden, ohne die Kraftübertragungselemente selbst zu öffnen. Die Montage- und Demontagearbeiten zum Auswechseln der endlosen Kraftübertragungselemente beschränken sich somit auf wenige Handgriffe, wie das Spannen und Entspannen nach der Montage bzw. zur Demontage.

In einem anderen Ausführungsbeispiel der Erfindung liegen - in Draufsicht auf den Hubtisch gesehen - die Kraftübertragungselemente außerhalb des Hubrahmens. Bei dieser Ausführung ist zwar die Baubreite größer, zur Montage oder Demontage der endlosen Kraftübertragungselemente ist ein Verfahren und ein Festkeilen des Hubtisches jedoch nicht erforderlich.

In Weiterbildung der Erfindung sind aufgrund der erfindungsgemäßen Anordnung der Kraftübertragungselemente nunmehr in einfacher Weise Treibriemen, vorzugsweise Zahnriemen, verwendbar, wodurch das Betriebsgeräusch eines derartigen Hubtisches deutlich gesenkt werden kann. Mit dem erfindungsgemäßen Hubtisch konnten Geräuschwerte von deutlich weniger als 70 dbA erzielt werden.

Vorteilhaft liegt der Ständerrahmen - in Draufsicht auf den Hubtisch gesehen - innerhalb des Hubrahmens. Liegt der Riementrieb auch außerhalb des Hubrahmens, kann es zur Vermeidung von überhöhten Lagerbelastungen der Antriebswellen der Hubanordnung zweckmäßig sein, wenn der dem Riementrieb benachbarte Längsbalken des Hubrahmens die Querbalken des Ständerrahmens kreuzt.

In einfacher Weise sind die Hubglieder als jeweils axial in einer Hubwange gehaltener Hubzapfen vorgesehen, der zur Erzielung eines geringen Betriebsgeräusches vorzugsweise mit einer Laufrolle an einer Laufbahn des Hubrahmens anliegt. In einfacher Weise kann die den Hubzapfen tragende Hubwange auch durch die Riemenscheibe gebildet sein, auf der das Kraftübertragungselement aufliegt.

In vorteilhafter Weiterbildung der Erfindung weist der Hubrahmen Kastenprofile als Längsbalken auf, die auf ihren einander zugewandten Längsseiten über ihre ganze Länge offen sind, wobei die im Inneren des Kastenprofils gelagerten Transportrollen des Hubrahmens über endlose Riemen angetrieben werden, die innerhalb des Kastenprofils liegen. Vorzugsweise sind hierzu Flachriemen oder Zahnriemen verwendet. Aufgrund der offenen Längsseiten ist wiederum nur ein geringer Montage- und Demontageaufwand zum Auswechseln eines endlosen Riemens notwenig. Dabei ist vorteilhaft vorgesehen, die Antriebsverbindungen zwischen benachbarten Transportrollen an wechselnden Endabschnitten der Transportrollen nach Art eines Z-Antriebs vorzusehen.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: eine Draufsicht auf ein erstes Ausführungsbeispiel eines erfindungsgemäßen Hubtisches mit abgenommenen Abdeckplatten,
- Fig. 2: einen Schnitt längs der Linie A-B gemäß Fig. 1 mit montierten Abdeckplatten,
- Fig. 3: einen Schnitt längs der Linie C-D gemäß Fig. 1 mit montierten Abdeckplatten,
- Fig. 4: in vergrößerter Darstellung einen Schnitt längs der Linie E-F gemäß Fig. 1,
- Fig. 5: eine Draufsicht auf ein weiteres Ausführungsbeispiel eines erfindungsgemäßen Hubtisches mit abgebnommenen Abdeckplatten,
- Fig. 6: eine Seitenansicht auf den Hubtisch nach Fig. 5,
- Fig. 7: einen Schnitt längs der Linie CC-DD in Fig. 5,
- Fig. 8: in vergrößerter Darstellung eine Einzelheit aus der Schnittdarstellung gemäß Fig. 7.

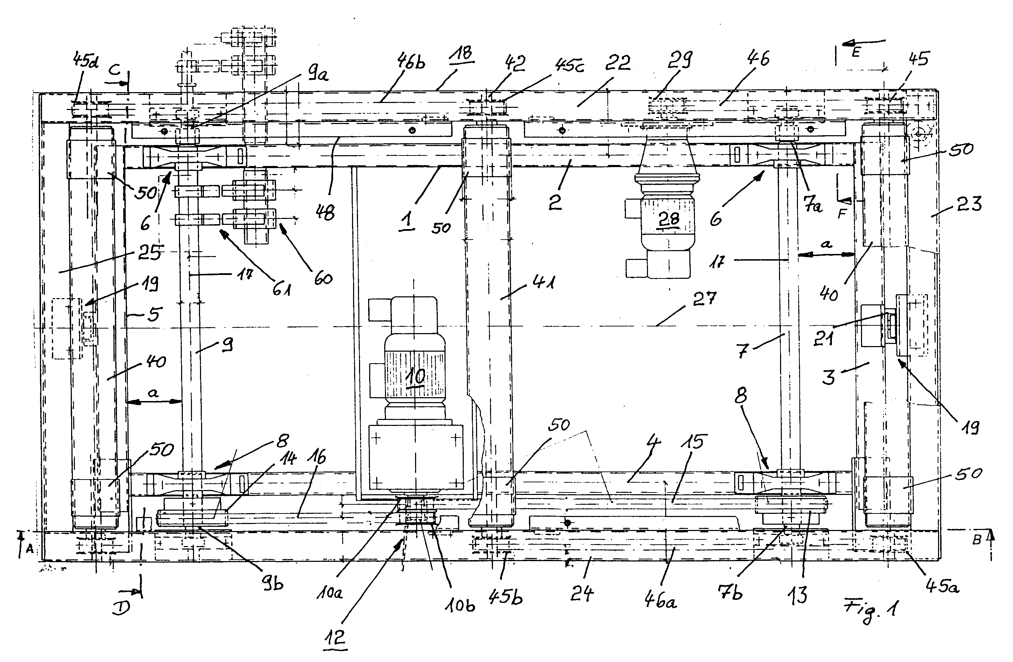

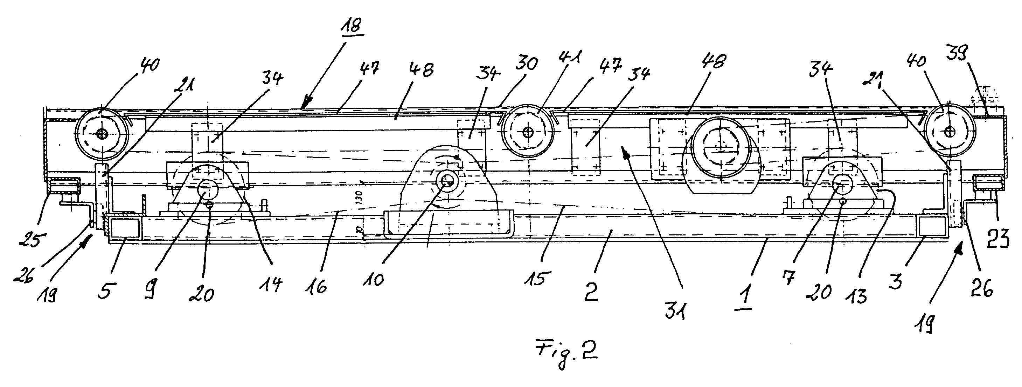

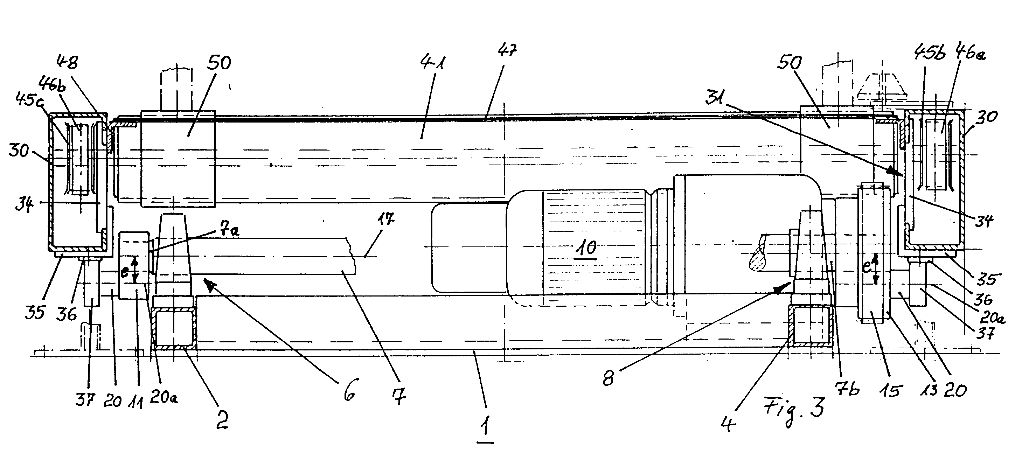

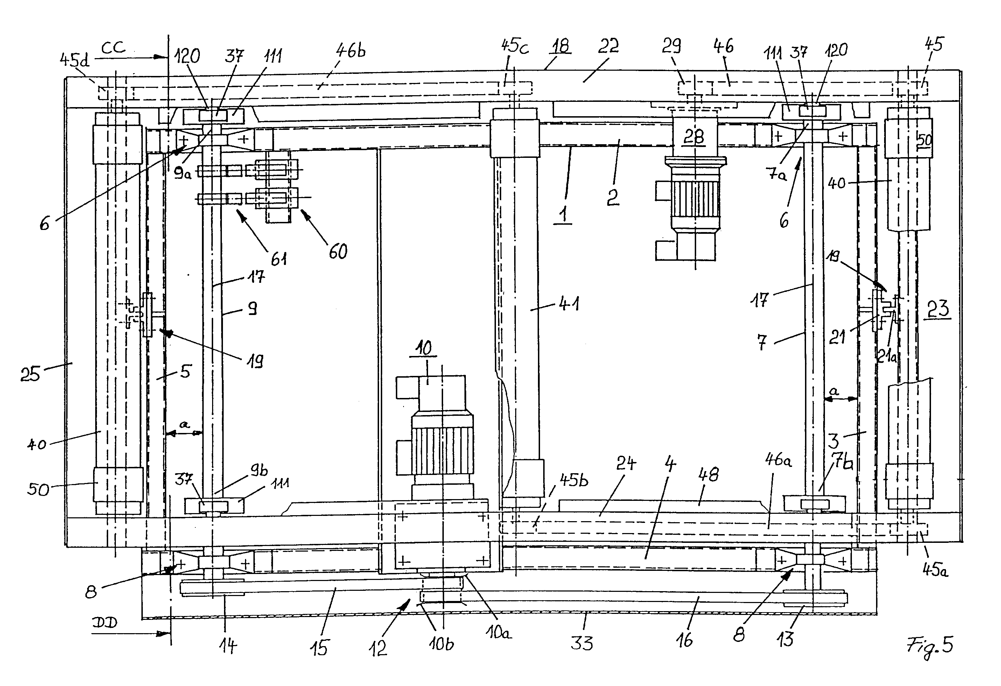

Aus der Draufsicht gemäß Fig. 1 bzw. Fig. 5 ist der Prinzipaufbau des erfindungsgemäßen Hubtisches erkennbar. Ein erster Rahmen 1 dient als Ständer des Hubtisches und hat im wesentlichen rechteckige Form. Im ersten Ausführungsbeispiel gemäß den Fig. 1 bis 4 haben die Längsbalken 2 und 4 ein quadratisches Querschnittsprofil (Fig. 3), während die Querbalken 3 und 5 ein rechteckiges Querschnittsprofil haben (Fig. 2). Die Höhe der Längs- und Querbalken ist gleich;. die Länge der Längsbalken 2 und 4 entspricht dabei etwa der doppelten Länge der Querbalken 3 und 5.

Benachbart zu den Querbalken 3 und 5 (Fig. 1, 3) liegt mit Abstand a jeweils eine Welle 7 bzw. 9, die in ihren Endabschnitten in Lagern 6 und 8 auf den Längsbalken 2 und 4 gehalten ist. Die beiden Wellen 7 und 9 tragen an ihren Endabschnitten 7a, 7b bzw. 9a, 9b drehfest jeweils ein Hubglied, auf denen ein Hubrahmen 18 unter Wirkung der Schwerkraft aufliegt. Der Hubrahmen 18 liegt somit an vier Stellen auf, wodurch eine hohe Stabilität beim Heben und Senken gewährleistet ist.

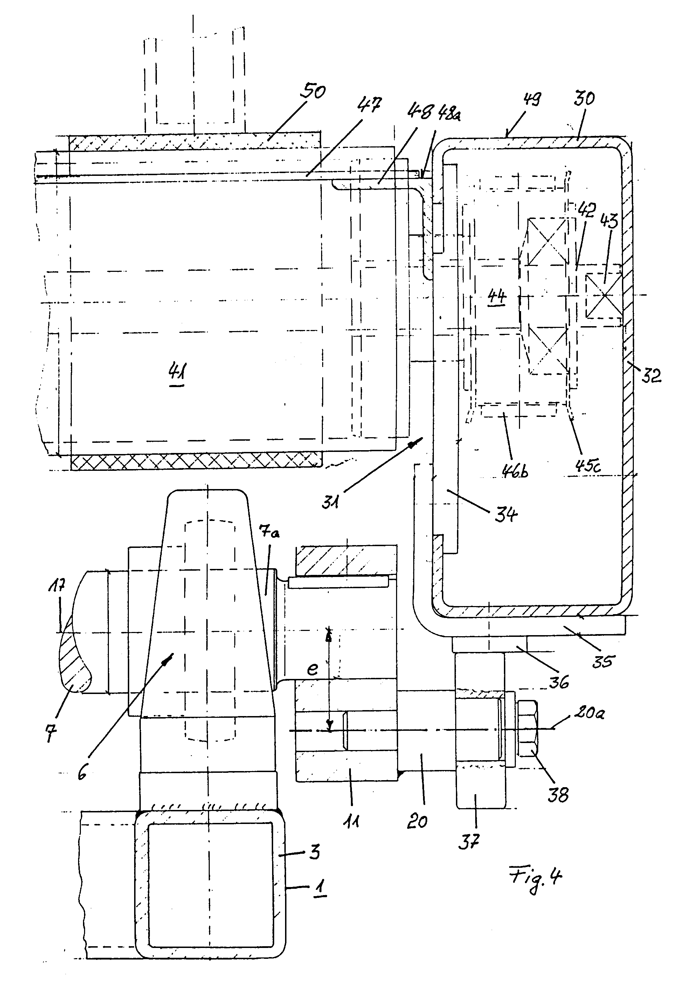

Im ersten Ausführungsbeispiel nach den Fig. 1 bis 4 ist auf der einen Längsseite des Rahmens 1 auf einem seitlich nach außen über den Längsbalken 2 herausstehenden Endabschnitt 7a der Welle 7 eine Hubwange 11 drehfest angeordnet, die einen Hubzapfen 20 trägt (Fig. 3). Die Achse 20a des Hubzapfens 20 liegt mit einem Abstand e zur Drehachse 17 der Welle 7 (Fig. 4).

Das andere Ende 7b der Welle 7 trägt auf seinem über den anderen Längsbalken 4 seitlich nach außen überstehenden Endabschnitt 7b eine Riemenscheibe 13, in der axial ein Hubzapfen 20 befestigt ist. Die Achse 20a des Hubzapfens 20 liegt in einem Abstand e parallel zur Drehachse 17 der Welle 7 (Fig. 3).

Die auf beiden Endabschnitten 7a und 7b der Welle 7 angeordneten Hubglieder, die aus einer Hubwange 11 bzw. einer Riemenscheibe 13 mit einem Hubzapfen 20 bestehen, liegen mit den Achsen 20a der Zapfen 20 achsgleich zueinander; die Hubzapfen 20 haben bei jeder Drehstellung der Welle 7 relativ zum Ständer 1 die gleiche Höhenlage.

Die Lagerung der Welle 9 und die Anordnung von Hubzapfen 20 an deren Endabschnitten 9a und 9b entspricht identisch der bei der Welle 7.

Auf die Riemenscheibe 13 ist ein Riemen 15, vorzugsweise ein Zahnriemen aufgezogen, der eine von einem ständerfesten Antrieb 10 angetriebene Riemenscheibe 10a umschlingt. Der Riemen 15 liegt dabei - in Draufsicht gemäß Fig. 1 - etwa parallel zum Längsbalken 4 außerhalb des Ständerrahmens 1. Neben der Riemenscheibe 10a ist auf der gleichen Antriebswelle des Antriebs 10 eine äußere Riemenscheibe 10b angeordnet, auf der ein Riemen 16 aufliegt, welcher eine auf dem Ende 9b der Welle 9 angeordnete Riemenscheibe 14 umschlingt. Auch der Riemen 16 liegt - in Draufsicht gemäß Fig. 1 - etwa parallel zum Längsbalken 4 außerhalb des Ständerrahmens 1, jedoch mit größerem Abstand zum Längsbalken als der Riemen 15.

Der außerhalb des Ständerrahmens 1 liegende Riementrieb 12 mit den Endlosriemen 15 und 16 ist so vorgesehen, daß alle Hubglieder jeweils eine gleiche relative Höhenlage zum Ständer 1 einnehmen.

Im ersten Ausführungsbeispiel nach den Fig. 1 bis 4 liegt der Ständerrahmen 1 innerhalb des Hubrahmens; der Hubrahmen 18 ist in Draufsicht gemäß Fig. 1 also größer als der Ständerrahmen 1 ausgebildet.

Der Hubrahmen 18 ist mittels Führungen 19 höhenbeweglich am Ständer 1 geführt. Die Führung 19 besteht aus einem vertikalen U-Profil 21, welches am Querbalken 3 bzw. 5 des Ständerrahmens 1 durch einen Winkel oder dergleichen befestigt ist. Das U-Profil 21 liegt mit seiner Öffnung dem Querbalken 23 bzw. 25 des Hubrahmens 18 zugewandt. Unterhalb des im Querschnitt rechteckförmigen Hohlprofils der Querbalken 23 und 25 ist ein Führungsnocken 26 befestigt, der in das U-Profil eingreift (Fig. 2). Auf diese Weise ist der Hubrahmen 18 in Längsrichtung der Mittellängsachse 27 des Hubtisches und in Querrichtung dazu weitgehend spielfrei gehalten. Ein Kippen um die Längsmittelachse ist durch die Auflage der Längsbalken 22 und 24 des Hubrahmens 18 auf den Hubzapfen 20 verhindert. Der Riementrieb 12 liegt dabei genau zwischen dem Ständerrahmen 1 und dem Hubrahmen 18 bzw. zwischen dem Längsbalken 4 des Ständerrahmens 1 und dem Längsbalken 24 des Hubrahmens 18.

Die Längsbalken 22 und 24 des Hubrahmens 18 sind aus einem Kastenprofil 30 (Fig. 3, 4) gebildet, welches über eine Längsseite 31 offen ist; ein derartiges Profil wird auch als C-Profil beschrieben. Das Kastenprofil 30 der Längsbalken 22 und 24 ist an seinen Enden auf den Querbalken 23 und 25 festgelegt. Die offenen Längsseiten 31 des Kastenprofils 30 liegen dabei einander zugewandt, also auf der Innenseite des Hubrahmens 18.

Innerhalb des Hubrahmens 18 sind quer zur Längsmittelachse 27 des Hubtisches liegende angetriebene Transportrollen 40 und 41 angeordnet. Die Transportrollen sind an ihren Enden 42 in Lagern 43 gehalten, die im Inneren des Kastenprofils 30 auf der geschlossenen Profillängsseite 32 festliegen (Fig. 4). Die innerhalb des Kastenprofils 30 liegenden Endabschnitte 44 der Transportrollen 40 und 41 tragen je eine Riemenscheibe 45 bis 45d. Wie aus Fig. 1 zu ersehen, ist die Riemenscheibe 45 über einen Riemen 46, vorzugsweise einen Zahnriemen, von einer Riemenscheibe 29 angetrieben, die auf der Welle eines Antriebsmotors 28 drehfest festliegt. Der Antriebsmotor 28 ist am Hubrahmen 18 befestigt und wird mit diesem verstellt.

Die auf dem anderen Endabschnitt der Transportrolle 40 angeordnete Riemenscheibe 45a trägt einen Riemen 46a, der die Riemenscheibe 45b der benachbarten Transportrolle 41 umschlingt. Somit wird die mittig angeordnete Transportrolle 41 vom Antrieb 28 über die Transportrolle 40 und den Riemen 46a angetrieben. Die auf dem Endabschnitt 44 der anderen Seite der mittleren Transportrolle 41 angeordnete Riemenscheibe 45c treibt einen Riemen 46b, der über die Riemenscheibe 45d die dem anderen Querbalken 25 benachbarte Transportrolle 40 antreibt. Diese Art des Antriebs der Transportrollen 40 und 41 über den Antriebsmotor 28 wird in Fachkreisen als Z-Antrieb bezeichnet. Als Riemen werden vorzugsweise Zahnriemen verwendet. Der Antrieb der Transportrollen über Riemen gewährleistet einen geräuscharmen Betrieb.

Die Transportrollen 40 und 41 sind in ihren Endbereichen über einen Ringabschnitt 50 mit einem reiberhöhenden Kunststoff oder Gummi beschichtet. Auch ist die Anordnung einer aus entsprechendem Material gebildeten Gummimanschette als Ringabschnitt 50 vorteilhaft. Die Ringabschnitte 50 stehen als Treibrollen für die Transporteinrichtung bzw. den Skid über eine Abdeckung des Hubrahmens hinaus, wie in Fig. 2 dargestellt ist. Die Abdeckung besteht dabei im wesentlichen aus zwei Abdeckblechen 47, die auf Tragflanschen 48 an den Längsbalken 22 und 24 des Hubrahmens aufliegen und befestigt sind. Die Tragflansche 48 sind auf der Innenseite des Kastenprofils oberhalb der Öffnung in der Längsseite 31 mit dem Kastenprofil 30 fest verbunden, zum Beispiel verschweißt. Die Auflagefläche 48a (Fig. 4) eines Tragflansches 48 liegt dabei etwas unterhalb der horizontalen Oberfläche 49 des Kastenprofils 30. Der Außenmantel des Ringabschnittes 50 liegt etwas oberhalb dieser Oberfläche 49.

Zum stirnseitigen Abschluß des Hubrahmens sind an den Querbalken 23 bzw. 25 Winkelbleche 39 angeschweißt (Fig. 2). Der horizontale Schenkel der Winkelbleche liegt dabei unterhalb der durch die Abdeckbleche 47 bestimmten Ebene.

Wie insbesondere aus den Fig. 2 bis 4 ersichtlich, ist das Kastenprofil 30 über einen Teil seiner Länge im Schwenkbereich der Hubzapfen 20 mit einem verstärkenden Winkelprofil 35 versehen, welches eine Lauffläche 36 aus einem geeigneten Material für ein auf dem Hubzapfen 20 drehbar angeordnete Laufrolle 37 aufweist. Die am Winkelprofil 35 befestigte Lauffläche 36 sowie das Laufrolle 37 sind aus einem geräuschdämmenden Material wie zum Beispiel Gummi gebildet, um eine geringe Geräuschentwicklung bei Relativbewegung der Teile zueinander zu gewährleisten. Die auf dem Hubzapfen 20 drehbar gelagerte Laufrolle 37 ist mittels einer Mutter 38 axial gesichert.

Wird der Antrieb 10 in Betrieb gesetzt, werden über die Riemen 15 und 16 die Wellen 7 und 9 angetrieben, so daß die exzentrisch zu den Wellenachsen angeordneten Hubzapfen 20 um die Drehachse 17 der Wellen verschwenken und eine Hubbewegung ausführen. Dabei rollen die Laufrollen 37 auf den Laufbahnen 36 der verstärkenden Winkelprofile 35 am Kastenprofil 30 ab. Der maximale Hub des Hubtisches ist erreicht, wenn die Hubzapfen vertikal über den Drehachsen 17 der Wellen 7 und 9 liegen. Der erreichte Hub entspricht dabei der doppelten Exzentrizität e, die die Hubzapfen 20 zur Drehachse 17 der Wellen 7 und 9 aufweisen.

Muß einer der Riemen 15 oder 16 oder beide Riemen des Riementriebs 12 ausgetauscht werden, wird der Hubrahmen 18 in seine oberste Hublage verfahren und in dieser Lage blockiert. Danach wird der Antrieb 10 wieder in Bewegung gesetzt, so daß die Hubzapfen vom Hubrahmen abheben und ein vertikaler Spalt zwischen den Hubzapfen und dem Hubrahmen entsteht, der etwa der doppelten Exzentrizität e entspricht. Aufgrund dieses Spaltes kann nun ohne weitere Demontagearbeiten der Riemen 16 von der Riemenscheibe 14 abgehoben und axial abgenommen werden. In der gleichen Weise ist auch der Riemen 15 zu entnehmen. Nach dem axialen Auflegen und Spannen neuer Riemen werden die Hubzapfen wieder in Anlage an den Hubrahmen gefahren und die Blockierung des Hubrahmens entfernt. Der Hubtisch ist wieder betriebsbereit.

Auch ein Auswechseln der Riemen 46 bis 46b des Z-Antriebs der Transportrollen 40 und 41 ist auf einfache Weise ohne großen Demontageaufwand möglich. Der Hubtisch wird in seine oberste Lage gefahren, so daß die offenen Langsseiten nach innen freiliegen. Nun werden die Lager der von dem auszutauschenden Riemen angetriebenen Transportrollen gelöst und die Transportrollen schräggestellt, so daß der Riemen axial von der Riemenscheibe entfernt werden kann. Durch die offene Längsseite 31 ist ein leichtes Entnehmen und Austauschen des Riemens ohne weitere Montage- oder Demontagearbeiten möglich.

Im Bedarfsfall können in der offenen Längsseite 31 des Kastenprofils 30 Versteifungsplatten 34 eingesetzt und festgeschraubt werden, die sich gegen die beiden Längskanten in der offenen Längsseite 31 abstützen. So können - wie zum Beispiel Fig. 2 zeigt - über die Länge eines Längsbalkens 22 bzw. 24 mehrere Versteifungsplatten 34 angeordnet werden.

In Fig. 1 sind oben links Endschalter 60 gezeigt, die von mit der Welle 9 drehenden Nocken 61 betätigt sind. Die Endschalter sind in der elektrischen Steuerung des Hubtisches verwendet. Es kann vorteilhaft sein, die Endschalter 60 und die sie betätigenden Nocken 61 - auf einer Verlängerung der Welle 9 sitzend - außerhalb des Hubrahmens liegend vorzusehen, wodurch eine einfachere Zugänglichkeit für Wartungsarbeiten gegeben ist.

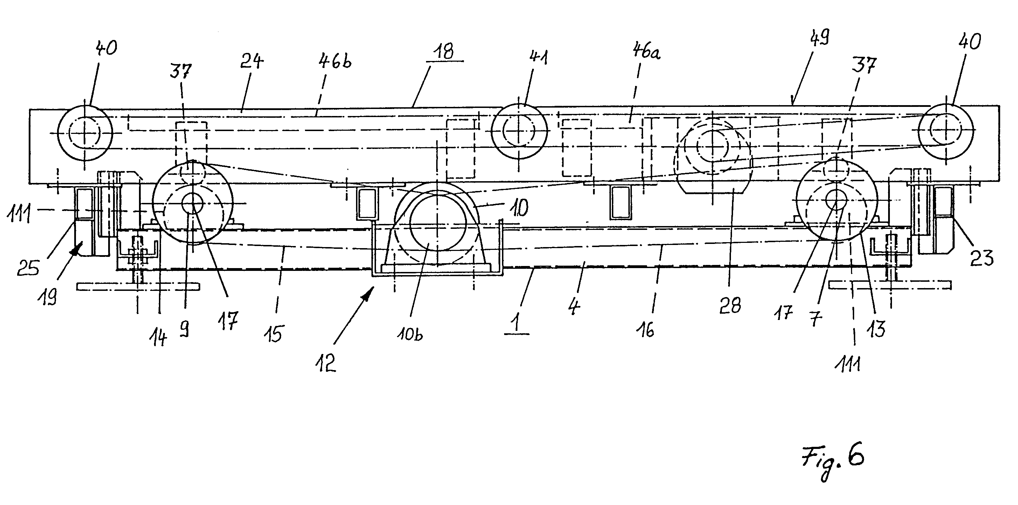

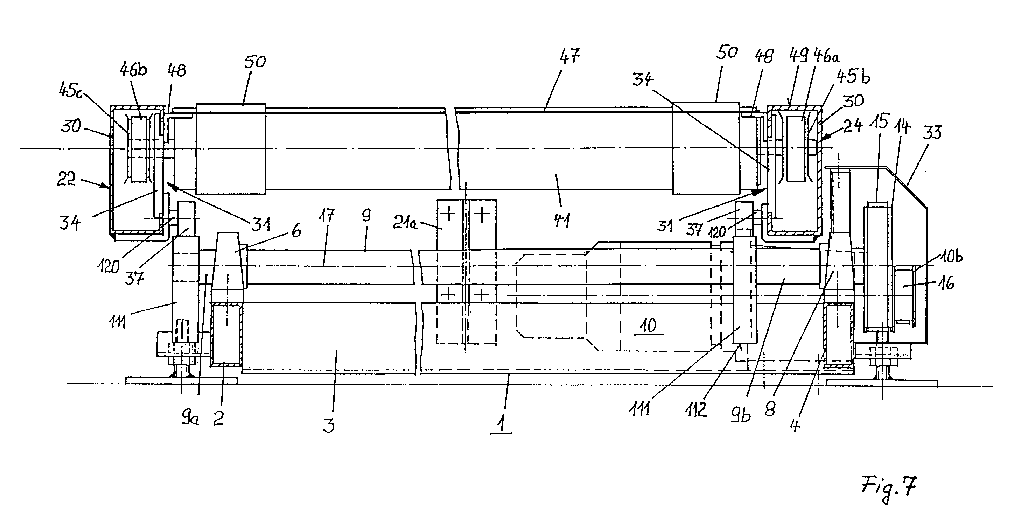

Das Ausführungsbeispiel eines erfindungsgemäßen Hubtisches gemäß den Fig. 5 bis 8 entspricht im Grundaufbau dem Hubtisch gemäß den Fig. 1 bis 4; für gleiche Teile wurden daher gleiche Bezugsziffern verwendet.

Wie Fig. 5 zeigt, liegt der Riementrieb 12 mit den Riemen 15 und 16 wiederum außerhalb des Ständerrahmens 1 außen neben dem Längsbalken 4. Der Hubrahmen 18 liegt - in Draufsicht gemäß Fig. 1 gesehen - mit seinem einen Längsbalken 22 außen neben dem dem Riementrieb 12 abgewandten Längsbalken 2 des Ständerrahmens, während der andere Längsbalken 24 des Hubrahmens 18 - in Draufsicht - innen neben dem Längsbalken 4 des Ständerrahmens 1 liegt. Dabei kreuzt der Längsbalken 24 des Hubrahmens die Querbalken 3 und 5 des Ständerrahmens. In Draufsicht auf den Hubtisch gesehen liegt der Riementrieb 12 somit auch außerhalb des Hubrahmens 18. Der Riementrieb 12 ist daher in jeder Lage des Hubrahmens 18 von außerhalb der Rahmen 1 und 18 frei zugänglich, so daß die endlosen Riemen 15 und 16 axial von den Riemenscheiben 10a; 14 und 10; 13 abgenommen werden können, ohne aufgetrennt werden zu müssen.

Um eine Gefährdung durch den außen liegenden Riementrieb 12 auszuschließen, ist dieser durch ein Gehäuse 33 (Fig. 1, 2) abgedeckt.

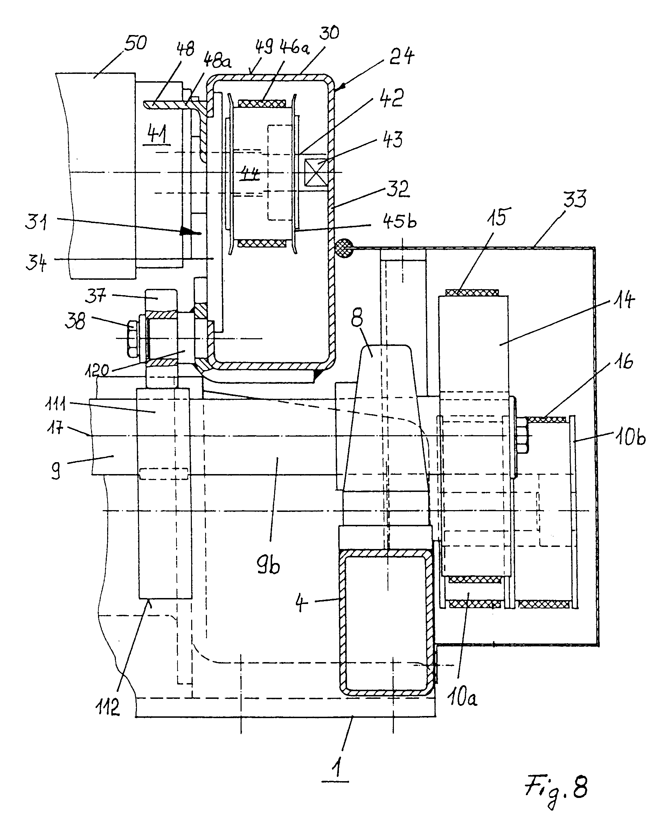

Im Ausführungsbeispiel nach den Fig. 5 bis 8 ist ferner jedes Hubglied durch eine Nockenscheibe 111 gebildet, deren Mantel eine Führungsbahn 112 bildet, auf der der Hubrahmen 18 unter Wirkung der Schwerkraft aufliegt. Vorteilhaft ist am Hubrahmen 18 ein Wellenstummel 120 befestigt, der eine auf der Führungsbahn 112 abrollende Laufrolle 37 trägt (Fig. 8), die axial durch die Mutter 38 gesichert ist. Die Laufrolle 37 hat zumindest eine Lauffläche aus geräuschdämmendem Material wie zum Beispiel Gummi; vorteilhaft ist die Laufrolle 37 selbst aus einem derartigen Material gefertigt.

Wie aus der Draufsicht auf den Hubtisch gemäß Fig. 5 ersichtlich, ragen die Wellenstummel 120 in den Hubrahmen 18 hinein; ein Wellenstummel 120 des einen Längsbalkens 22 liegt dabei dem Wellenstummel 120 des anderen Längsbalkens 24 gegenüber, derart, daß je zwei Wellenstummel auf einer gemeinsamen Achse liegen. Entsprechend liegen die auf den Endabschnitten 7a, 7b bzw. 9a, 9b der Wellen 7 und 9 drehfest angeordneten Nockenscheiben 111 - in Draufsicht auf den Hubtisch - innerhalb des Hubrahmens 18. Dabei liegen die auf den Endabschnitten 7a bzw. 9a festliegenden Nockenscheiben 111 außerhalb des Ständerrahmens 1 seitlich neben den Längsbalken 2, während die auf den anderen Endabschnitten 7b zw. 9b festliegenden Nockenscheiben 111 - in Draufischt - innerhalb des Ständerrahmens 1 auf der dem Lager 6 zugewandten Seite des Lagers 8 liegen.

Die Führung 19 zwischen dem Hubrahmen 18 und dem Ständerrahmen 1 besteht wiederum aus einem U-Profil 21, das dem Querbalken 23 bzw. 25 zugewandt am Querbalken 3 bzw. 5 des Ständerrahmens 1 befestigt ist. In die vertikale Führungsbahn des U-Profils 21 greift der Steg eines T-Profils 21a ein, das vertikal am Querbalken 23 bzw. 25 des Hubrahmens 18 festliegt.

Neben der in Fig. 1 gezeichneten Lage von Hubrahmen 18 und Ständerrahmen 1 kann es vorteilhaft sein, den Ständerrahmen 1 außerhalb des Hubrahmens 18 liegend anzuordnen. Die die Riemenscheiben 13 und 14 tragenden Wellenenden müssen dann unter dem Längsbalken 24 des Hubrahmens durchragen, damit der Riementrieb 12 außerhalb des Hubrahmens liegt.

## Patentansprüche

1. Hubtisch zur Überwindung eines Höhensprungs in Förderstraßen für Transporteinrichtungen wie Skids oder dergleichen, bestehend aus einem Ständerrahmen (1) und einem am Ständerrahmen (1) höhenbeweglich gelagerten Hubrahmen (18), der von einer Hubanordnung über exzentrisch gelagerte Hubglieder angehoben oder abgesenkt werden kann, wobei die Hubglieder gemeinsam von einem ständerfesten Antrieb (10) über endlose Kraftübertragungselemente (15, 16) drehend angetrieben und damit relativ zum Ständerrahmen höhenverstellbar sind, dadurch gekennzeichnet daß die die Hubglieder antreibenden Kraftübertragungselemente (15, 16) - in Draufsicht auf den Hubtisch gesehen - außerhalb neben dem Ständerrahmen (1) angeordnet sind.

2. Hubtisch nach Anspruch 1,
dadurch gekennzeichnet, daß der Hubrahmen (18) unter Wirkung der Schwerkraft auf den Hubgliedern aufliegt.

3. Hubtisch nach Anspruch 1 und 2,
dadurch gekennzeichnet, daß - in Draufsicht auf den Hubtisch gesehen - die Kraftübertragungselemente (15, 16) zwischen dem Ständerrahmen (1) und dem Hubrahmen (18) liegen.

4. Hubtisch nach einem der Ansprüche 1 bis 3,
dadurch gekennzeichnet, daß der Ständerrahmen (1) - in Draufsicht auf den Hubtisch gesehen - innerhalb des Hubrahmens (18) liegt.

5. Hubtisch nach einem der Ansprüche 1 bis 4,
dadurch gekennzeichnet, daß die Kraftübertragungselemente (15, 16) Riemen, vorzugsweise Zahnriemen sind.

6. Hubtisch nach Anspruch 1 oder 2,
dadurch gekennzeichnet, daß - in Draufsicht gesehen - ein dem Riementrieb (12) benachbarter Längsbalken (24) des Hubrahmens (18) die Querbalken (3, 5) des Ständerrahmens (1) kreuzt.

7. Hubtisch nach einem der Ansprüche 1 bis 6,
dadurch gekennzeichnet, daß das Hubglied ein axial in einer Hubwange (11) gehaltener Zapfen (20) ist, der vorzugsweise mit einer insbesondere aus einem geräuschdämmenden Material bestehenden Laufrolle (37) an einer Laufbahn (35) des Hubrahmens (18) anliegt.

8. Hubtisch nach Anspruch 7,
dadurch gekennzeichnet, daß die den Hubzapfen (20) tragende Hubwange Teil einer Riemenscheibe (13, 14) ist, auf der ein Kraftübertragungselement (15, 16) aufliegt (Fig. 3).

9. Hubtisch nach einem der Ansprüche 1 bis 6,
dadurch gekennzeichnet, daß das Hubglied eine Nockenscheibe (111) ist, auf deren Führungsbahn (112) der Hubrahmen (18) vorzugsweise mit einer insbesondere aus einem geräuschdämmenden Material bestehenden Laufrolle (37) aufliegt.

10. Hubtisch nach einem der Ansprüche 1 bis 9,
dadurch gekennzeichnet, daß parallel zu den Querbalken (3, 5) des Ständerrahmens (1) mindestens eine in Lagern (6, 8) an den Längsbalken (2, 4) des Ständerrahmens (1) gehaltene Welle (7, 9) angeordnet ist, die an ihren Endabschnitten (7a, 7b; 9a, 9b) je ein Hubglied trägt.

11. Hubtisch nach einem der Ansprüche 1 bis 10,
dadurch gekennzeichnet, daß die Längsbalken (22, 24) des Hubrahmens (18) aus auf ihren einander zugewandten Längsseiten (31) offenen Kastenprofilen (30) bestehen, wobei die im Inneren des Kastenprofils (30) gelagerten Transportrollen (40, 41) des Hubrahmens (18) über innerhalb des Kastenprofils (30) liegende Riemen (46, 46a, 46b) angetrieben sind.

12. Hubtisch nach Anspruch 11,
dadurch gekennzeichnet, daß benachbarte Transportrollen (40, 41) an wechselnden Endabschnitten (44) der Transportrollen (40, 41) von endlosen Antriebsmitteln nach Art eines Z-Antriebs angetrieben sind.

13. Hubtisch nach Anspruch 11 oder 12,
dadurch gekennzeichnet, daß die offene Längsseite (31) des Kastenprofils (30) durch zwischen den Längskanten der offenen Längsseite (31) angeordnete, lösbare Platten (34) versteift ist.

## Claims

1. Elevating platform for surmounting a difference in level of conveyor tracks for conveyor devices such as skids or the like, consisting of an upright frame (1) and an elevating frame (18) mounted to move vertically on the upright frame (1), which elevating frame (18) can be raised or lowered by an elevating arrangement by way of eccentrically mounted elevating members, the elevating members being driven in rotation jointly by a drive (10) integral with the upright, by way of endless power-transmission members (15, 16) and thus being vertically adjustable relative to the upright frame, characterized in that the power-transmission members (15, 16) - seen in plan view towards the elevating platform - driving the elevating members are located externally beside the upright frame (1).

2. Elevating platform according to Claim 1, characterized in that the elevating frame (18) rests under the action of gravity on the elevating members.

3. Elevating platform according to Claims 1 and 2, characterized in that - seen in plan view towards the elevating platform - the power-transmission members (15, 16) lie between the upright frame (1) and the elevating frame (18).

4. Elevating platform according to one of Claims 1 to 3, characterized in that - seen in plan view towards the elevating platform - the upright frame (1) lies within the elevating frame (18).

5. Elevating platform according to one of Claims 1 to 4, characterized in that the power-transmission members (15, 16) are belts, preferably toothed belts.

6. Elevating platform according to Claim 1 or 2, characterized in that - seen in plan view - a longitudinal beam (24) of the elevating frame (18) adjacent to the belt drive (12) crosses the transverse beams (3, 5) of the upright frame (1).

7. Elevating platform according to one of Claims 1 to 6, characterized in that the elevating member is a journal (20) held axially in an elevating cheek (11), which journal preferably bears against a track (35) of the elevating frame (18) by a roller (37) consisting in particular of a sound-insulating material.

8. Elevating platform according to Claim 7, characterized in that the elevating cheek supporting the elevating journal (20) is part of a belt pulley (13, 14), on which a power-transmission member (15, 16) rests (Figure 3).

9. Elevating platform according to one of Claims 1 to 6, charcterized in that the elevating member is a cam disc (111), on the guide path (112) of which rests the elevating frame (18) preferably by a roller (37) consisting in particular of a sound-insulating material.

10. Elevating platform according to one of Claims 1 to 9, characterized in that located parallel to the transverse beams (3, 5) of the upright frame (1) is at least one shaft (7, 9) held in bearings (6, 8) on the longitudinal beams (2, 4) of the upright frame (1), which shaft respectively supports an elevating member on its end sections (7a, 7b; 9a, 9b).

11. Elevating platform according to one of Claims 1 to 10, characterized in that the longitudinal beams (22, 24) of the elevating frame (18) consist of box sections (30) which are open on their facing longitudinal sides (31), the conveyor rollers (40, 41) of the elevating frame (18) mounted inside the box section (30) being driven by way of belts (46, 46a, 46b) lying within the box section (30).

12. Elevating platform according to Claim 11, characterized in that adjacent conveyor rollers (40, 41) are driven at alternating end sections (44) of the conveyor rollers (40, 41) by endless drive means in the manner of a Z-drive.

13. Elevating platform according to Claim 11 or 12, characterized in that the open longitudinal side (31) of the box section (30) is strengthened by detachable plates (34) disposed between the longitudinal edges of the open longitudinal side (31).

## Revendications

1. Table élévatrice pour surmonter une différence de niveau d'une voie de transport pour des installations de transport, tels qu'un madrier-support ou analogues, comprenant un cadre porteur (1) et un cadre de levage (18) monté de manière mobile en hauteur sur le cadre porteur (1) et pouvant être relevé ou abaissé par un système de levage par l'intermédiaire d'organes de levage excentrés, les organes de levage étant ensemble entraînés en rotation par un mécanisme d'entraînement (10) solidaire du support, par l'intermédiaire d'éléments de transmission (15, 16) sans fin et pouvant ainsi être réglés en hauteur par rapport au cadre porteur, **caractérisée en ce** que les éléments de transmission (15, 16) entraînant les organes de levage sont disposés - dans la vue de dessus de la table élévatrice - extérieurement à côté du cadre porteur (1).

2. Table élévatrice selon la revendication 1, caractérisée en ce que le cadre de levage (18) repose par gravité sur les organes de levage.

3. Table élévatrice selon les revendications 1 et 2, caractérisée en ce que - dans la vue de dessus de la table élévatrice - les éléments de transmission (15, 16) sont placés entre le cadre porteur (1) et le cadre de levage (18).

4. Table élévatrice selon l'une des revendications 1 à 3, caractérisée en ce que - dans la vue de dessus de la table élévatrice - le cadre porteur (1) est disposé à l'intérieur du cadre de levage (18).

5. Table élévatrice selon l'une des revendications 1 à 4, caractérisée en ce que les éléments de transmission (15, 16) sont des courroies, de préférence des courroies crantées.

6. Table élévatrice selon l'une des revendications 1 ou 2 caractérisée en ce que - vu de dessus - un longeron (24) du cadre de levage (18) situé au voisinage de la commande à courroie (12) croise les traverses (3, 5) du cadre porteur (1).

7. Table élévatrice selon l'une des revendications 1 à 6, caractérisée en ce que l'organe de levage est un tourillon (20) maintenu axialement dans une face de levage (11), qui est appliqué de préférence avec un galet de roulement (37) constitué notamment d'un matériau d'insonorisation, contre une bande de roulement (35) du cadre de levage (18).

8. Table élévatrice selon la revendication 7, caractérisée en ce que la face de levage portant le tourillon de levage (20) fait partie d'une poulie (13, 14) sur laquelle repose un élément de transmission (15, 16) (fig. 3).

9. Table élévatrice selon l'une des revendications 1 à 6, caractérisée en ce que l'organe de levage est un disque à cames (111) sur le contour (112) duquel le cadre de levage (18) repose de préférence avec un galet de roulement (37) constitué notamment d'un matériau d'insonorisation.

10. Table élévatrice selon l'une des revendications 1 à 9, caractérisée en ce que parallèlement aux traverses (3, 5) du cadre porteur (1) est disposé au moins un arbre (7, 9) maintenu dans des paliers (6, 8) sur les longerons (2, 4) du cadre porteur (1) dont les sections terminales (7a, 7b; 9a, 9b) portent chacune un organe de levage.

11. Table élévatrice selon l'une des revendications 1 à 10, caractérisée en ce que les longerons (22, 24) du cadre de levage (18) sont constitués de profilés en caisson (30) ouverts sur leurs longs côtés (31) tournés l'un vers l'autre, les rouleaux de transport (40, 41) du cadre de levage (18) placés à l'intérieur du profilé en caisson (30) étant entraînés par l'intermédiaire de courroies (46, 46a, 46b) situées à l'intérieur dudit profilé en caisson (30).

12. Table élévatrice selon la revendication 11, caractérisée en ce que des rouleaux de transport (40, 41) voisins sont entraînés, à des sections terminales (44) alternantes des rouleaux de transport (40, 41), par des moyens d'entraînement sans fin à la manière d'une commande en Z.

13. Table élévatrice selon l'une des revendications 11 ou 12, caractérisée en ce que le long côté (31) ouvert du profilé en caisson (30) est renforcé par des plaques (34) amovibles montées entre les bords longitudinaux du long côté (31) ouvert.
